# FASCICULE DE BREVET EUROPEEN

(11) **EP 3 077 197 B1**
(45) Date de publication et mention de la délivrance du brevet: **26.07.2017**
(21) Numéro de dépôt: 14808999.8
(22) Date de dépôt: 05.12.2014
(51) Int. Cl.: B32B 5/02, A47L 13/16, B32B 5/08, B32B 5/18, B32B 5/24, B32B 5/32, B32B 37/12

(54) **EPONGE DE NETTOYAGE A BASE DE MICROFIBRES**
MIKROFASERBASIERTER REINIGUNGSSCHWAMM
MICROFIBRE-BASED CLEANING SPONGE

(30) Priorité: 06.12.2013 FR 1362238
(43) Date de publication de la demande: 12.10.2016
(73) Titulaire: Eurvest S.A., 1400 Nivelles (BE)
(72) Inventeur: KLIMIS, Jean, B-1400 Nivelles (BE); KLIMIS, Pierre, B-1380 Ohain (BE)
(74) Mandataire: August & Debouzy avocats
(86) Numéro de dépôt international: PCT/EP2014/076801
(87) Numéro de publication internationale: WO 2015/082715

(56) Documents cités:
- WO-A1-97/49326
- WO-A2-2013/167304
- DE-A1-102012 009 422
- FR-A1- 2 958 525
- US-A- 4 525 411
- US-A1- 2011 239 394

## Description

### DOMAINE TECHNIQUE

La présente invention concerne le domaine des produits d'entretien. Plus particulièrement, la présente invention porte sur une éponge utile dans le nettoyage et l'essuyage de surfaces domestiques ou utile pour la vaisselle.

### ARRIERE PLAN TECHNIQUE DE L'INVENTION

Il est connu d'utiliser des éponges pour le nettoyage et l'essuyage de la vaisselle. Typiquement, ces éponges présentent une partie absorbante en matière synthétique ou végétale susceptible d'absorber des liquides à l'intérieur de l'éponge sur laquelle est assemblée une couche abrasive destinée à récurer les articles de vaisselle.

Cependant, ce sont les mêmes éponges qui sont généralement utilisées dans les ménages pour essuyer les surfaces mouillées. Or ces éponges, si elles permettent l'absorption de liquides, présentent néanmoins de faibles propriétés d'essuyage et peuvent laisser des traces humides sur les surfaces traitées.

Il existe également des lingettes d'entretien réalisées en microfibres tissées qui offrent de meilleures propriétés d'essuyage et plus particulièrement d'essuyage des graisses. Toutefois, ces lingettes sont fines et susceptibles de s'effilocher ce qui limite leur durée de vie ou le type de surface sur lesquelles les utiliser. D'autre part, elles possèdent une capacité de rétention de liquide limitée en comparaison avec une éponge.

Une première solution connue, consiste à appliquer une couche de microfibres sur des éponges absorbantes pour augmenter le pouvoir essuyant des éponges classiques. C'est le cas notamment des produits décrits dans les documents US-A-2011/0239394 et FR-A-2 915 075. D'autres éponges tri-couches comprenant une couche en microfibres sont également connues du document FR-A-2 958 525. De la même manière, les documents WO 97/49326 et US 4,525,411 décrivent des éponges sur lesquelles une couche textile en microfibres est collée par le biais d'un adhésif.

Toutefois, il n'est pas aisé d'utiliser des matériaux microfibrés dans les procédés conventionnels de fabrication des éponges, consistant généralement à assembler entre elles des nappes sous la forme d'un assemblage qui est ensuite découpé aux dimensions des éponges.

En effet, les matériaux microfibrés démontrent une forte tendance à se déformer et à désolidariser lorsqu'ils sont découpés. C'est notamment la raison pour laquelle les lingettes en microfibres sont généralement dotées d'une couture sur leur pourtours pour éviter que le matériau ne s'effiloche. Le document US-A-2011/0239394 pointe ce même problème lorsqu'il propose de chanfreiner les bords de l'éponge de façon à limiter la dégradation de la couche en microfibre.

### RESUME DE L'INVENTION

La présente invention permet de surmonter les inconvénients de l'art antérieur en offrant une éponge facile à fabriquer, offrant une excellente capacité d'essuyage ainsi qu'une excellente résistance mécanique. Par ailleurs, la présente invention vise à combiner ensemble les avantages des textiles à base de microfibres et matériaux absorbants pour obtenir un produit présentant à la fois une bonne capacité de rétention de liquide et performance optimale d'essuyage.

Un premier aspect de l'invention porte sur une éponge comprenant une couche d'un matériau absorbant et une couche d'un matériau textile au moins partiellement à base de microfibres consolidé par un agent liant, ladite couche textile recouvrant au moins partiellement une ou plusieurs des faces de la couche de matériau absorbant.

Selon un mode de réalisation de l'invention, la face de la couche de matériau absorbant opposée à celle recouverte par le matériau en microfibres consolidées est recouverte par une couche comprenant au choix: un matériau abrasif, un matériau d'éponge cellulosique, un tissu cellulosique, une mousse de polyuréthane, un matériau hydrophile, une mousse de polyuréthane hydrophile, un matériau alvéolaire à pores ouverts, un polymère d'acétate de vinyle, un matériau textile, un matériau textile à base de microfibres identique ou différent de celui utilisé sur la face opposée, et de préférence un matériau abrasif.

Selon un mode de réalisation de l'invention, le matériau textile à base de microfibres consolidé recouvre l'ensemble de la surface de la couche absorbante hydrophile sur laquelle il est assemblé.

Selon un mode de réalisation de l'invention, le bord de l'éponge n'est pas chanfreiné et la couche de matériau à base de microfibres consolidé présente un bord droit aligné sur le bord de la couche du matériau absorbant.

Selon un mode de réalisation de l'invention, les microfibres du matériau textile à base de microfibres sont tissées, non tissées, ou tricotées, de préférence tricotées ou tissées éventuellement sous la forme de bouclettes.

Selon un mode de réalisation de l'invention, l'agent liant est un polymère, de préférence le polyuréthane.

Selon un mode de réalisation de l'invention, les microfibres sont en polyester, en polyamide et de préférence un mélange de polyester et polyamide.

Selon un mode de réalisation de l'invention, la couche de matériau en microfibres consolidé a une épaisseur comprise entre 0,3 et 4mm, de préférence comprise entre 0,8 et 2 mm et de façon encore préférée comprise entre 1,2 et 1,6 mm et la couche absorbante a une épaisseur comprise entre 1,0 et 5,0 cm; de préférence entre et 1,5 et 3,5 cm; et de façon encore préférée comprise entre 1,7 et 2,5 cm.

Selon un mode de réalisation de l'invention, le rapport massique de microfibres/agent liant sont compris entre 9,5:0,5 et 5:5, de préférence entre 9 :1 et 7 :3 et de manière encore préférée entre 8,2 :1,8 et 7,3 :2,7.

Selon un mode de réalisation de l'invention, la couche de matériau en microfibres a un grammage compris entre 250 et 400 g/m², de préférence entre 300 et 360 g/m².

Un autre aspect de la présente invention concerne un procédé de fabrication d'une éponge selon l'une quelconque des revendications précédentes comprenant les étapes consistant à (i) assembler par collage ou flambage une couche d'un matériau textile à base de microfibres consolidées par un agent liant sur une couche d'un matériau absorbant, (ii) optionnellement assembler par collage ou flambage une troisième couche comprenant au choix un matériau d'éponge cellulosique, un tissu cellulosique, une mousse de polyuréthane, un matériau hydrophile, une mousse de polyuréthane hydrophile, un matériau alvéolaire à pores ouverts, un polymère d'acétate de vinyle, un matériau textile, un matériau textile à base de microfibres identique ou différent de la première couche microfibre, de préférence une couche en matériau abrasif et (iii) découper l'ensemble ainsi obtenu sous forme d'une éponge, par exemple par une scie, emporte-pièce ou bien jet d'eau.

Selon un mode de réalisation de l'invention, le matériau textile à base de microfibres est consolidé par imprégnation de la couche dans une solution de polymère qui est polymérisée par un agent coagulant.

Un autre aspect de la présente invention concerne l'utilisation d'un matériau textile à base de microfibres consolidé par un agent liant tel qu'un polymère pour la fabrication d'une surface d'essuyage d'une éponge.

### DESCRIPTION DETAILLEE DE L'INVENTION

Selon la présente invention, le terme « éponge » s'entend d'un matériau absorbant, poreux et/ou fibreux, naturel ou synthétique, utilisé pour le nettoyage de surface ou d'articles de vaisselle. Une éponge se présente généralement sous la forme d'un rectangle présentant deux faces principales et quatre faces latérales. Les faces dites « principales » offrent les plus grandes surfaces de contact de toutes les faces de l'éponge Le terme éponge désigne un article capable d'être directement manipulé par l'utilisateur et se distingue des tissus.

Les éponges selon l'invention comprennent une première couche d'un matériau absorbant. Celui-ci peut être souple et poreux.

Les matériaux utilisés dans les éponges sont connus de l'homme du métier. Typiquement, des matériaux cellulosiques, de tissus cellulosiques, de mousses de polyuréthane, de matériaux alvéolaires à pores ouverts, de matériaux alvéolaires hydrophiles, de matériaux alvéolaires à base d'un polymère d'acétate de vinyle, ou des matériaux en mélamine peuvent être utilisés.

L'éponge végétale (ou cellulosique) est réalisée par régénération de fibres de cellulose, lesquelles participent à une meilleure absorption de liquide à l'intérieur de l'éponge. Préalablement à la régénération de la cellulose, on incorpore à la matière des grains de sel qui sont fondus et dissous durant le processus de fabrication, générant ainsi une structure poreuse caractéristique de l'éponge et contribuant à son pouvoir absorbant.

Il est possible de préparer des mousses synthétiques, par exemple des mousses de polyuréthane obtenues par la combinaison chimique de réactifs, dont principalement un iso cyanate et un polyol. La nature chimique des mousses de polyuréthane est principalement définie par le polyol utilisé. Ainsi, les mousses de polyuréthane conventionnelles, hydrophobes, sont souvent à base de polyols hydrophobes tel que par exemple les polyols à base de propylène. Au contraire, en utilisant des polyols hydrophiles, tels que par exemple le polyéthylène glycol, on peut obtenir un polyuréthane hydrophile.

Dans une version particulièrement avantageuse de l'invention, on utilise une éponge hydrophile. Par éponge ou mousse « hydrophile », on entend, dans le présent texte et dans les revendications, une éponge ou une mousse présentant un taux d'absorption par capillarité après 15 secondes supérieur à 0,10 g/cm², de préférence supérieur à 0,50 g/cm² pour une épaisseur de 20mm.

Typiquement, la couche absorbante d'une éponge synthétique présente une densité (poids volumique) comprise entre 18 et 40 kg/m³ et de façon préférée comprise entre 20 et 30 kg/m³. Elle peut être adaptée selon les utilisations envisagées. Une densité trop faible peut entrainer une rétention de liquide insuffisante tandis qu'une densité trop élevée peut altérer la souplesse et impacte le coût.

La structure poreuse des éponges est telle qu'elle favorise l'absorption des liquides par capillarité. Ce pouvoir capillaire permet d'essuyer des surfaces humides avec plus ou moins d'efficacité, car les pores de l'éponge peuvent se remplir d'eau, mais ils sont aussi susceptibles de relâcher l'eau lorsqu'ils sont soumis à une certaine pression. Typiquement, la taille des pores des éponges synthétique ou cellulosique est de l'ordre de quelques dixièmes de millimètres voire quelques millimètres. Pour cette raison, la performance d'essuyage d'une éponge est imparfaite et des traces de liquide restent généralement apparentes sur la surface essuyée après passage de l'éponge.

Les éponges selon la présente invention comprennent en outre une couche d'un matériau textile à base de microfibres consolidé. Le terme « à base de microfibres» n'exclut pas la présence d'autres composants dans le matériau textile, mais implique au moins la présence de microfibres. Les microfibres peuvent être non tissées, tissées ou bien encore tricotées. Selon un mode particulier de l'invention, les microfibres sont tissées ou tricotées et peuvent former des bouclettes sur la surface du textile.

Les textiles à base de microfibres sont réputés par l'homme de métier pour leur pouvoir absorbant. En effet, plus les fibres sont fines, plus la taille des espaces entre elles est petite et plus le pouvoir d'absorption par capillarité est grand. De plus, l'étroitesse des espaces inter capillaires permet au textile d'améliorer la rétention d'eau et donc de limiter les traces de liquide déposées sur la surface essuyée.

Les matériaux textiles en microfibres utilisés pour les éponges et les lingettes sont généralement tissés, non tissés ou tricotés et sont donc assemblés de telle façon à ce qu'ils ont tendance à se désolidariser au niveau des bords et des sections. La colle typiquement utilisée pour assembler la couche textile et la couche éponge ne permet pas de résoudre ce problème car elle ne couvre la nappe textile que sur une face, et de façon superficielle.

L'agent liant, quant à lui, correspond à un agent de traitement qui conditionne le textile à base de microfibres en consolidant les fibres entre elles. Typiquement, le traitement des microfibres intervient au cours du procédé de fabrication des éponges à une étape distincte de celle du collage du matériau à un substrat.

La présente invention permet de surmonter cet inconvénient et de faciliter l'utilisation des matériaux à base de microfibres dans les procédés de fabrication d'éponge. Il a en effet été découvert de façon surprenante qu'en traitant préalablement les textiles à base de microfibres, il était possible de les solidariser sous la forme d'une couche consolidée. Ces couches, ou nappes possèdent alors une résistance et des propriétés mécaniques améliorées par rapport aux matériaux textiles à base de microfibres connus et s'avèrent particulièrement utiles pour les produits d'entretien de type éponge. La consolidation des matériaux à base de microfibres dans le cadre de la présente invention implique que les microfibres sont solidarisées à travers l'ensemble du matériau et non seulement à sa surface. Typiquement, les microfibres sont solidarisées de façon homogène à travers le matériau de la couche textile.

Le traitement consiste à ajouter au textile à base de microfibres un agent liant qui solidarise les fibres entre elles. Typiquement, cette étape peut être réalisée par imprégnation en solubilisant ou suspendant un polymère liant dans un solvant et en faisant passer une nappe textile intermédiaire de microfibres dans ladite solution ou suspension. L'agent liant est ensuite polymérisé par traitement physique, thermique ou chimique, par exemple avec un agent coagulant connu dans le domaine.

Il est également possible d'utiliser une couche textile non tissée contenant un mélange de microfibres et de fibres thermo fusibles (qui fondent à température relativement basse). Par traitement thermique, les fibres additionnelles sont ainsi fondues et contribuent à solidariser les microfibres et à consolider la couche textile après refroidissement. D'autres procédés accessibles à l'homme du métier sont également envisageables comme la vaporisation d'un agent liant sur la nappe.

En outre, il est possible et avantageux de recourir à un procédé d'imprégnation dans lequel la réaction de coagulation de l'agent liant s'accompagne d'une émission gazeuse qui favorise la formation de pores dans le polymère d'imprégnation. Il est également possible et avantageux d'incorporer dans la solution d'imprégnation de fines particules de sel inerte, qui sont finalement évacuées par lavage et contribuent à une structure poreuse dans le polymère coagulé. Un polymère particulièrement préféré pour consolider les couches de microfibres est le polyuréthane.

Les textiles en microfibres utilisés dans les matériaux de la présente invention sont connus de l'homme du métier et peuvent être réalisés de façon conventionnelle avec des microfibres de polyamide, de polyester ou de leurs copolymères.

Typiquement les rapports massiques entre le textile à base de microfibres et le polymère dans les nappes imprégnées sont compris entre 9,5:0,5 et 5:5, de préférence entre 9 :1 et 7 :3 et de manière encore préférée entre 8,2 :1,8 et 7,3 :2,7.

Les matériaux à base de microfibres ainsi obtenus sont alors utiles pour la fabrication des éponges. Typiquement, les couches textiles sont assemblées sur au moins l'une des faces d'une couche absorbante, par exemple par collage ou flambage. Les matériaux en microfibres consolidés peuvent alors recouvrir partiellement ou bien complètement la surface de la face de la couche absorbante sur laquelle elle est placée.

Les assemblages ainsi obtenus peuvent alors être découpés, par exemple à l'aide de d'une scie, circulaire, vibrante ou à ruban, emporte-pièce ou éventuellement jet d'eau, sous la forme d'éponges sans qu'il soit nécessaire de traiter ou de chanfreiner outre mesure les bords de l'éponge pour éviter que la couche essuyante en microfibres ne s'effiloche. Cela est d'autant plus avantageux que les contraintes mécaniques s'exerçant sur une éponge sont conséquentes au moment de frotter ou de récurer les articles de vaisselle.

Les éponges de la présente invention sont dimensionnées de la façon suivante. La couche en microfibre présente une épaisseur typiquement comprise entre 0,3 et 4mm, de préférence comprise entre 0,8 et 2mm et de façon encore préférée comprise entre 1,2 et 1,6 mm Grâce à la présente invention, il devient possible de limiter l'épaisseur de la couche essuyante et de l'éponge dans son ensemble sans pour autant altérer les propriétés mécaniques de l'éponge. L'épaisseur de la couche poreuse absorbante a quant à elle une épaisseur conventionnelle comprise entre 1,0 et 5,0 cm; de préférence entre et 1,5 et 3,5 cm; et de façon encore préférée comprise entre 1,7 et 2,5 cm.

Il s'est avéré que les microfibres bien que traitées, de par leur structure très fine et leur nombre, offraient un fort pouvoir absorbant et essuyant particulièrement utiles pour des éponges multifonctions. Elles permettent notamment de capter toutes sortes de salissures et de graisses, mais également d'absorber des liquides, l'eau, l'huile ou des détergents.

Il s'avère d'ailleurs que la consolidation des matériaux à base de microfibres permet d'améliorer le pouvoir essuyant des éponges par rapport aux éponges à base de microfibres conventionnelles. Sans être lié par une quelconque théorie, cet effet serait dû au lissage de la surface essuyante par le polymère de liaison. La capacité de rinçage de l'éponge est donc également améliorée puisque les salissures sont évacuées plus facilement de la surface lorsque l'éponge est rincée.

L'utilisation d'un agent liant permet également d'augmenter la résistance mécanique des éponges traditionnelles, le polymère de traitement influençant sur la cohésion des microfibres et sur la résistance générale de l'éponge.

L'objet de la présente invention est particulièrement avantageux pour des éponges plus complexes, telles que celles décrites dans la demande WO 2013/167304. En effet, pour ce type d'éponge, une ou plusieurs surface sont fragilisées par la présence d'au moins une cavité distincte des pores de l'éponge, adaptée à permettre l'introduction d'un liquide à l'intérieur de l'éponge.

L'agent liant permet alors d'augmenter la résistance mécanique de ce type d'éponges et de limiter en cours de manipulation la tendance de la couche en microfibres à s'effilocher au niveau du bord de chaque orifice présent sur ladite couche.

Ainsi, la présente invention concerne également une éponge comportant au moins une cavité, distincte des pores de l'éponge, adaptée à permettre l'introduction d'un liquide à l'intérieur de l'éponge pour imprégner l'éponge, par exemple sur un côté ou une surface de l'éponge ; dont toutes les faces sont nettoyantes et /ou génératrices de mousse. De préférence, la cavité présentant un fond à l'intérieur de l'éponge, et débouchant d'autre part sur une surface de l'éponge en formant un orifice tel que la distance maximale entre deux points du contour de l'orifice est comprise entre 3, de préférence 5, de préférence encore 8, et 25, de préférence 20, de préférence encore 15 mm ou de préférence encore 12 mm. Ledit orifice a typiquement une surface comprise entre 5 et 200 mm², de préférence comprise entre 20 et 120 mm² et de façon encore préférée entre 50 et 120 mm² ou encore entre 50 et 100 mm². Le contour de l'orifice peut est de forme circulaire, ovale ou rectangulaire.

Selon un autre mode de réalisation de l'invention l'éponge selon l'invention comporte en outre une deuxième couche collée sur au moins une partie de la surface inférieure de l'éponge. Lorsque l'éponge comporte plusieurs couches, assurant éventuellement une fonction différente, la deuxième couche est en matériau abrasif et la troisième couche est en matériau à base de microfibres. L'orifice de l'éponge est alors situé sur la troisième couche et la cavité traverse ladite troisième couche.

Un autre aspect de l'invention concerne un procédé de nettoyage dans lequel l'utilisateur recharge l'éponge en liquide nettoyant au cours de la phase de nettoyage, par exemple sous l'eau courante. Pour recharger l'éponge, l'utilisateur introduit l'embout du flacon contenant le produit nettoyant directement dans l'orifice de l'éponge. Le liquide nettoyant est un liquide dégraissant, liquide dégraissant ou liquide vaisselle, de préférence du liquide vaisselle.

Egalement, dans une exécution préférée de l'invention, il s'avère que le l'agent liant est un polymère lequel peut lui-même également posséder une porosité intrinsèque ce qui permet d'augmenter le pouvoir se séchage des surfaces par capillarité lors du passage de l'éponge. Cela est particulièrement vrai lorsque le polyurethane est utilisé en tant qu'agent liant. De telles propriétés ont été démontrées à l'aide de tests mesurant le pouvoir d'absorption sur de l'huile, comme démontrée dans le protocole de l'exemple.

Un mode de réalisation particulièrement préféré de l'invention concerne une éponge tri-couches, c'est-à-dire comprenant une couche supplémentaire offrant des fonctions différentes. La couche de matériau absorbante comprend typiquement une couche supplémentaire sur la face opposée à celle recevant le matériau en microfibres consolidé. Cette couche supplémentaire peut être une couche abrasive ou bien être une autre couche choisie dans le groupe de matériaux comprenant :
un matériau d'éponge cellulosique,
un tissu cellulosique,
une mousse de polyuréthane,
un matériau hydrophile,
une mousse de polyuréthane hydrophile,
un matériau alvéolaire à pores ouverts,
un polymère d'acétate de vinyle,
un matériau textile,
un matériau textile à base de microfibres identique ou différent de celui utilisé pour la première couche.

La couche abrasive est typiquement réalisée au moyen d'une nappe non tissée imprégné de résine thermodurcissable incluant, par exemple des charges abrasives. Ces charges abrasives peuvent être de la limaille de fer, du quartz, du corindon, du verre recyclé, des particules de talc ou de fins grains de matière plastique.

### EXEMPLES

### Exemple 1.

Les éponges suivantes ont été testées dans le but de tester leurs propriétés d'essuyage des graisses.
1. Eponge selon l'invention (comprenant une couche en microfibres consolidée par polyuréthane + couche en mousse synthétique de 22kg/m³)
2. Eponge synthétique de 22kg/m³

Deux séries d'essais ont été réalisés. Pour chacune d'entre elles, un liquide gras (huile végétale colorée en rouge) a été utilisé.

Dans une première série d'essais, deux gouttes d'un diamètre de +/- 4 cm a été placée puis essuyée à l'aide de chacune des deux éponges par 3 mouvements aller-retour. Les résultats montrent que l'éponge selon l'invention permet d'effacer toute trace rouge du liquide gras tandis que l'autre éponge conventionnelle ne permet pas d'effacer totalement ces traces.

Dans une deuxième série d'essais, un récipient a été rempli avec le liquide gras jusqu'à une hauteur de 6 mm. Les éponges à tester, de dimensions semblables ont alors été placées verticalement dans le récipient sur la tranche pendant quelques minutes. Les résultats montrent une absorption du liquide dans l'éponge de l'invention qui est supérieure à celle obtenue pour l'éponge synthétique.

### Exemple 2.

Deux éponges, l'une synthétique, l'autre cellulosique sans couche textile en microfibres ont été comparées à une éponge selon l'invention pour leur résistance à l'abrasion. Le test a été réalisé sur un abrasimètre rotatif Branca à une pression de 250 g/cm² par frottement sur une grille en fibre de verre recouverte de teflon. Après 500 et 800 tours, les deux premières éponges étaient totalement dégradées, tandis que l'éponge selon l'invention n'était que très légèrement dégradée après 4000 tours. Les propriétés mécaniques des éponges selon l'invention sont ainsi considérablement améliorées par rapport aux éponges connues.

## Revendications

1. Eponge comprenant une couche d'un matériau absorbant et une couche d'un matériau textile consolidé par un agent liant, le matériau textile étant à base de microfibres solidarisées à travers l'ensemble du matériau; ladite couche textile recouvrant au moins partiellement une ou plusieurs des faces de la couche de matériau absorbant.

2. Eponge selon la revendication 1 dans laquelle la face de la couche de matériau absorbant opposée à celle recouverte par le matériau en microfibres consolidées est recouverte par une couche comprenant au choix: un matériau abrasif, un matériau d'éponge cellulosique, un tissu cellulosique, une mousse de polyuréthane, un matériau hydrophile, une mousse de polyuréthane hydrophile, un matériau alvéolaire à pores ouverts, un polymère d'acétate de vinyle, un matériau textile, un matériau textile à base de microfibres identique ou différent celui utilisé sur la face opposée, et de préférence un matériau abrasif.

3. Eponge selon l'une des revendications 1 ou 2 dans laquelle le matériau textile à base de microfibres consolidé recouvre l'ensemble de la surface de la couche absorbante hydrophile sur laquelle il est assemblé.

4. Eponge selon l'une des revendications 1 à 3 dans laquelle le bord de l'éponge n'est pas chanfreiné et la couche de matériau à base de microfibres consolidé présente un bord droit aligné sur le bord de la couche du matériau absorbant.

5. Eponge selon l'une des revendications 1 à 4 dans laquelle les microfibres du matériau textile à base de microfibres sont tissées, non tissées, ou tricotées, de préférence tricotées ou tissées, éventuellement sous la forme de bouclettes.

6. Eponge selon l'une des revendications 1 à 5 dans laquelle l'agent liant est un polymère, de préférence le polyuréthane.

7. Eponge selon l'une des revendications 1 à 6 dans laquelle les microfibres sont en polyester, en polyamide et de préférence un mélange de polyester et polyamide.

8. Eponge selon l'une des revendications 1 à 7 dans laquelle la couche de matériau en microfibres consolidé a une épaisseur comprise entre 0,3 et 4mm, de préférence comprise entre 0,8 et 2 mm et de façon encore préférée comprise entre 1,2 et 1,6 mm et la couche absorbante a une épaisseur comprise entre 1,0 et 5,0 cm; de préférence entre et 1,5 et 3,5 cm; et de façon encore préférée comprise entre 1,7 et 2,5 cm.

9. Eponge selon l'une des revendications 1 à 8 dans laquelle le rapport massique de microfibres/agent liant sont compris entre 9,5:0,5 et 5:5, de préférence entre 9 :1 et 7 :3 et de manière encore préférée entre 8,2 :1,8 et 7,3 :2,7 ; et/ou dans laquelle la couche de matériau en microfibres a un grammage compris entre 250 et 400 g/m², de préférence entre 300 et 360 g/m².

10. Eponge selon l'une des revendications 1 à 9 comportant au moins une cavité, distincte des pores de l'éponge, adaptée à permettre l'introduction d'un liquide à l'intérieur de l'éponge pour imprégner l'éponge, la cavité présentant de préférence un fond à l'intérieur de l'éponge, et débouchant d'autre part sur une surface de l'éponge en formant un orifice tel que la distance maximale entre deux points du contour de l'orifice est comprise entre 3, de préférence 5, de préférence encore 8, et 25, de préférence 20, de préférence encore 15 mm ou de préférence encore 12 mm, et/ou l'orifice a une surface comprise entre 5 et 200 mm², de préférence comprise entre 20 et 120 mm² et de façon encore préférée entre 50 et 120 mm² ou encore entre 50 et 100 mm².

11. Eponge selon l'une des revendications 1 à 10 dépourvue de manchon réservoir ou comprenant un tel manchon.

12. Eponge selon l'une des revendications 10 à 11, comprenant une cavité, distincte des pores de l'éponge et débouchant sur une surface de l'éponge en formant un orifice, obtenue par prélèvement de matière dans l'éponge, de préférence par forage, fraisage, incision ou meulage, et/ou dans laquelle le contour de l'orifice est de forme circulaire, ovale ou rectangulaire.

13. Eponge selon l'une des revendications 10 à 12 adaptée pour être rechargée en liquide nettoyant à l'intérieur de ladite l'éponge au cours de la phase de nettoyage par introduction de l'embout d'un flacon contenant le liquide nettoyant dans l'orifice.

14. Procédé de fabrication d'une éponge selon l'une quelconque des revendications précédentes comprenant les étapes consistant à (i) assembler par collage ou flambage une couche d'un matériau textile à base de microfibres consolidées par un agent liant sur une couche d'un matériau absorbant, (ii) optionnellement assembler par collage ou flambage une troisième couche comprenant au choix un matériau d'éponge cellulosique, un tissu cellulosique, une mousse de polyuréthane, un matériau hydrophile, une mousse de polyuréthane hydrophile, un matériau alvéolaire à pores ouverts, un polymère d'acétate de vinyle, un matériau textile, un matériau textile à base de microfibres identique ou différent celui utilisé sur la face opposée de la couche opposée, de préférence une couche en matériau abrasif et (iii) découper l'ensemble ainsi obtenu sous forme d'une éponge, par exemple par une scie, emporte-pièce ou bien jet d'eau, et dans lequel le matériau textile à base de microfibres est de préférence consolidé par imprégnation de la couche dans une solution de polymère qui est polymérisée par un agent coagulant.

15. Utilisation d'un matériau textile consolidé par un agent liant tel qu'un polymère, le matériau textile étant à base de microfibres solidarisées à travers l'ensemble du matériau, pour la fabrication d'une surface d'essuyage d'une éponge.

## Patentansprüche

1. Schwamm, umfassend eine Schicht aus einem saugfähigen Material und eine Schicht aus einem durch ein Bindemittel konsolidierten Textilstoff, wobei der Textilstoff auf Mikrofasern basiert, die durch den ganzen Textilstoff hindurch verbunden sind; wobei die Textilschicht eine oder mehrere Seiten der Schicht aus saugfähigem Material mindestens teilweise abdeckt.

2. Schwamm nach Anspruch 1, wobei die Seite der Schicht aus saugfähigem Material, die der vom konsolidierten Mikrofaserstoff abgedeckten Schicht gegenüberliegt, von einer Schicht abgedeckt ist, die einen der nachfolgenden Stoffe umfasst: einen abrasiven Stoff, einen Celluloseschwammstoff, ein Cellulosegewebe, einen Polyurethanschaum, einen hydrophilen Stoff, einen hydrophilen Polyurethanschaum, einen offenporigen Schaumstoff, ein Vinylacetatpolymer, einen Textilstoff, einen auf Mikrofasern basierenden Textilstoff, der der gleiche oder ein anderer ist als derjenige, der auf der gegenüberliegenden Seite verwendet wurde, und vorzugsweise einen abrasiven Stoff.

3. Schwamm nach einem der Ansprüche 1 oder 2, wobei der konsolidierte Textilstoff auf Mikrofaserbasis die ganze Seite der hydrophilen saugfähigen Schicht abdeckt, auf der er ausgebildet ist.

4. Schwamm nach einem der Ansprüche 1 - 3, wobei der Rand des Schwamms nicht abgerundet ist und die konsolidierte Mikrofasermaterialschicht einen mit dem Rand der Schicht aus saugfähigem Material ausgerichteten rechten Rand aufweist.

5. Schwamm nach einem der Ansprüche 1 - 4, wobei die Mikrofasern des Textilstoffs auf Mikrofaserbasis gewebt, Vliesstoff oder ggf. schlingenartig gestrickt sind.

6. Schwamm nach einem der Ansprüche 1 - 5, wobei das Bindemittel ein Polymer, vorzugsweise Polyurethan, ist.

7. Schwamm nach einem der Ansprüche 1 - 6, wobei die Mikrofasern aus Polyester, Polyamid und vorzugsweise einer Mischung aus Polyester und Polyamid bestehen.

8. Schwamm nach einem der Ansprüche 1 - 7, wobei die konsolidierte Mikrofasermaterialschicht eine Dicke zwischen 0,3 und 4 mm, vorzugsweise zwischen 0,8 und 2 mm und besonders bevorzugt zwischen 1,2 und 1,6 mm aufweist, und die saugfähige Schicht eine Dicke zwischen 1,0 und 5,0 cm, vorzugsweise zwischen 1,5 und 3,5 cm und besonders bevorzugt zwischen 1,7 und 2,5 aufweist.

9. Schwamm nach einem der Ansprüche 1 - 8, wobei das Gewichtsverhältnis von Mikrofasern zu Bindemittel zwischen 0,5 : 0,5 und 5 : 5, vorzugsweise zwischen 9 : 1 und 7 : 3 und besonders bevorzugt zwischen 8,2 : 1,8 und 7,3: 2,7 liegt; und/oder wobei die Mikrofasermaterialschicht ein Flächengewicht zwischen 250 und 400 g/m2, vorzugsweise zwischen 300 und 360 g/m2 aufweist.

10. Schwamm nach einem der Ansprüche 1 - 9, umfassend mindestens einen Hohlraum, der sich von den Poren des Schwamms unterscheidet und geeignet ist, die Einführung einer Flüssigkeit ins Innere des Schwamms zu ermöglichen, um den Schwamm zu imprägnieren, wobei der Hohlraum vorzugsweise im Inneren des Schwamms einen Boden aufweist und andererseits zu einer Seite des Schwamms führt und dabei eine Öffnung bildet, die derart ist, dass der maximale Abstand zwischen zwei Punkten des Umrisses der Öffnung zwischen 3, vorzugsweise 5, besonders bevorzugt 8 mm, und 25, vorzugsweise 20, besonders bevorzugt 15 und ganz besonders bevorzugt 12 mm liegt und/oder die Öffnung eine Fläche zwischen 5 und 200, vorzugsweise zwischen 20 und 120 mm2 und besonders bevorzugt zwischen 50 und 120 oder zwischen 50 und 100 m2 aufweist.

11. Schwamm nach einem der Ansprüche 1 - 10 mit oder ohne Reservoirhülse.

12. Schwamm nach einem der Ansprüche 10 - 11, umfassend einen Hohlraum, der sich von den Poren des Schwamms unterscheidet und zu einer Seite des Schwamms führt, um eine Öffnung zu bilden, die durch Entnahme von Material aus dem Schwamm, vorzugsweise durch Aufbohren, Fräsen, Ausschneiden oder Präzisionsschleifen hergestellt wird und/oder wobei der Umriss der Öffnung kreisförmig, oval oder rechteckig ist.

13. Schwamm nach einem der Ansprüche 10 - 12, der geeignet ist, im Inneren des Schwamms während der Reinigung dadurch mit Reinigungsflüssigkeit aufgeladen zu werden, dass die Düse einer die Reinigungsflüssigkeit enthaltenden Flasche in die Öffnung eingeführt wird.

14. Verfahren zur Herstellung eines Schwamms nach einem der vorstehenden Ansprüche, umfassend die Schritte: (i) Herstellen einer Schicht aus einem von einem Bindemittel konsolidiertem Textilstoff auf Mikrofaserbasis durch Verkleben oder Knicken auf einer Schicht aus einem saugfähigen Material ; (ii) wahlweise Herstellen einer dritten Schicht durch Verkleben oder Knicken, die einen der nachfolgenden Stoffe umfasst: einen Celluloseschwammstoff, ein Cellulosegewebe, einen Polyurethanschaum, einen hydrophilen Stoff, einen hydrophilen Polyurethanschaum, einen offenporigen Schaumstoff, ein Vinylacetatpolymer, einen Textilstoff, einen auf Mikrofasern basierenden Textilstoff, der der gleiche oder ein anderer ist als derjenige, der auf der gegenüberliegenden Seite verwendet wurde, und vorzugsweise einen abrasiven Stoff; und (iii) Zuschneiden des derart hergestellten Gegenstands in Form eines Schwamms z.B. mithilfe einer Säge, eines Locheisens oder eines Wasserstrahls, wobei der Textilstoff auf Mikrofaserbasis vorzugsweise durch Imprägnieren der Schicht in einer durch ein Koagulationsmittel polymerisierten Polymerlösung konsolidiert ist.

15. Verwendung eines durch ein Bindemittel wie z.B. ein Polymer konsolidierten Textilstoffs, wobei der Textilstoff auf Mikrofasern basiert, die durch den ganzen Textilstoff hindurch verbunden sind, um eine Wischfläche eines Schwamms herzustellen.

## Claims

1. Sponge comprising a layer of absorbent material and a layer of textile material consolidated with a binding agent, the textile material being in microfibres bonded together throughout the entirety of the material; said textile layer at least partially covering one or more of the surfaces of the layer of absorbent material.

2. Sponge according to claim 1, wherein the surface of the layer of absorbent material opposite the surface covered by the consolidated microfibre material is covered with a layer from among: an abrasive material, cellulose sponge material, cellulose fabric, polyurethane foam, hydrophilic material, hydrophilic polyurethane foam, open-pore cellular material, vinyl acetate polymer, a textile material, a microfibre textile material identical to or differing from the material used on the opposite surface, and preferably an abrasive material.

3. Sponge according to one of claims 1 or 2, wherein the consolidated microfibre textile material covers the entirety of the surface of the hydrophilic absorbent layer on which it is assembled.

4. Sponge according to one of claims 1 to 3, wherein the edge of the sponge is not chamfered and the layer of consolidated microfibre material has a straight edge aligned with the edge of the layer of absorbent material.

5. Sponge according to one of claims 1 to 4, wherein the microfibres of the microfibre textile material are woven, nonwoven or knitted, preferably knitted or woven, possibly in the form of a weft-knitted terry.

6. Sponge according to one of claims 1 to 5, wherein the binding agent is a polymer, preferably polyurethane.

7. Sponge according to one of claims 1 to 6, wherein the microfibres are made from polyester, polyamide or preferably a mixture of polyester and polyamide.

8. Sponge according to one of claims 1 to 7, wherein the layer of consolidated microfibre material has a thickness of between 0.3 and 4 mm, preferably between 0.8 and 2 mm, and more preferably between 1.2 and 1.6 mm, and the absorbent layer has a thickness of between 1.0 and 5.0 cm; preferably between 1.5 and 3.5 cm, and more preferably between 1.7 and 2.5 mm.

9. Sponge according to one of claims 1 to 8, wherein the microfibre/binding agent weight ratio is between 9.5:0.5 and 5:5, preferably between 9:1 and 7:3, and more preferably between 8.2:1.8 and 7.3:2.7; and/or the gram weight of the layer of microfibre material is between 250 and 400 g/m², preferably between 300 and 360 g/m².

10. Sponge according to one of claims 1 to 9 comprising at least one cavity, other than the sponge pores, adapted to allow the insertion of a liquid inside the sponge to impregnate the sponge, the cavity preferably having a bottom inside the sponge and opening onto a surface of the sponge forming an orifice such that the maximum distance between two points of the contour of the orifice is between 3, preferably 5, more preferably 8 and 25, preferably 20, more preferably 15 mm or further preferably 12 mm, and/or the orifice has surface area of between 5 and 200 mm², preferably between 20 and 120 mm², more preferably between 50 and 120 mm², and further preferably between 50 and 100 mm².

11. Sponge according to one of claims 1 to 10 devoid of a reservoir sleeve or comprising such a sleeve.

12. Sponge according to one of claims 10 to 11 comprising a cavity, other than the pores of the sponge, and opening onto a surface of the sponge forming an orifice obtained by removing sponge material preferably by drilling, milling, incision or grinding, and/or wherein the contour of the orifice is of circular, oval or rectangular shape.

13. Sponge according to one of claims 10 to 12 adapted to be refilled with cleaning liquid inside said sponge during a cleaning phase, by inserting the tip of a bottle containing the cleaning liquid into the orifice.

14. Method for manufacturing a sponge according to any of the preceding claims comprising the steps of (i) assembling by bonding or buckling a layer of microfibre textile material consolidated with a binding agent on a layer of an absorbent material, (ii) optionally assembling by bonding or buckling a third layer comprising a material selected from among a cellulosic sponge material, cellulosic fabric, polyurethane foam, hydrophilic material, hydrophilic polyurethane foam, open-pore cellular material, vinyl acetate polymer, textile material, microfibre textile material identical to or different from the one used on the opposite surface of the opposite layer, preferably a layer of abrasive material and (iii) cutting of the assembly thus obtained into the shape of a sponge e.g. using a saw, cutter or water jet, and wherein the microfibre textile material is preferably consolidated by impregnation of the layer with a polymer solution that is polymerised by a coagulating agent.

15. Use of a textile material consolidated with a binding agent such as a polymer, the textile material being in microfibres bonded together throughout the entirety of the material, for manufacturing a wiping surface of a sponge.
